# EUROPEAN PATENT APPLICATION

(11) **EP 4 468 645 A2**
(43) Date of publication of application: **27.11.2024**
(21) Application number: 24199696.6
(22) Date of filing: 09.01.2019
(51) Int. Cl.: H04L 5/00

(54) **METHOD AND APPARATUS FOR EARLY MEASUREMENT CONFIGURATION**

(62) Divisional of application: 19849614.3
(71) Applicant: ZTE Corporation, Shenzhen, Guangdong 518057 (CN)
(72) Inventor: AI, Jianxun, Shenzhen, 518057 (CN); HUANG, He, Shenzhen, 518057 (CN); LIU, Jing, Shenzhen, 518057 (CN); SHI, Xiaojuan, Shenzhen, 518057 (CN)
(74) Representative: Vossius & Partner Patentanwälte Rechtsanwälte mbB

(57) **Abstract**

A method and apparatus for configuring early measurement specifically for RRC resume procedure so as to support fast Multi-RAT (Radio Access Technology) dual connectivity (MR-DC) configuration, and to support early measurement in New Radio with dual connectivity is disclosed. In one embodiment, a method for performing an early measurement by a first wireless communication node, includes: receiving a first message from a second wireless communication node, wherein the first message comprises early measurement configuration of one of the following: at least one first carrier frequency and at least one first frequency band; and performing an early measurement according to the early measurement configuration, when the first wireless communication node supports one of the following: a carrier-aggregation (CA) configuration and a dual-connectivity (DC) configuration, between one of the following: a serving carrier and a second frequency band of a serving cell of the second wireless communication node, and one of the following: the at least one first carrier frequency and the at least one first frequency band.

## Description

### TECHNICAL FIELD

This disclosure relates generally to wireless communications and, more particularly, to a method and apparatus for configuring early measurement specifically for RRC resume procedure so as to support fast Multi-RAT (Radio Access Technology) dual connectivity (MR-DC) configuration, and to support early measurement in New Radio with dual connectivity.

### BACKGROUND

With a continuous increasing of global smartphone users, mobile data usage and traffic will continue to grow. In New Radio, dual connectivity (DC) are proposed to allow a wireless communication device with multiple transceivers to simultaneously receive data packet from at least two wireless communication nodes, for example a Master gNodeB (MgNB) and a secondary gNodeB (SgNB). In New Radio, a wireless communication device can perform measurement on intra-frequency, inter-frequency and inter-RAT (Radio Access Technology) frequencies. This frequency measurement by the wireless communication device is configured by a Master gNodeB and/or a Secondary gNodeB in order to facilitate mobility management or other radio resource management functions.

### SUMMARY OF THE INVENTION

The exemplary embodiments disclosed herein are directed to solving the issues related to one or more problems presented in the prior art, as well as providing additional features that will become readily apparent by reference to the following detailed description when taken in conjunction with the accompany drawings. In accordance with various embodiments, exemplary systems, methods, and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the invention.

A base station (BS) configures measurement configuration for a UE in a RRC connected state via a RRC message. The UE performs an early measurement and prepares an early measurement report according to the early measurement configuration in the RRC connected state. The BS makes decisions on DC or CA configuration for the UE according to the early measurement report from the UE. This procedure causes significant delay for the UE in the RRC connected state. In 3GPP LTE Release 15, an idle mode measurement is introduced to expedite the CA configuration. With this technology, a UE can be configured with an early measurement configuration used for an early measurement in a RRC idle state. The UE performs the early measurement in the RRC idle state and stores early measurement results. When the UE is transited to a RRC connected state, the UE transmits the stored early measurement results to the BS as soon as a request for the early measurement results from the BS is received. The BS can configure the CA based on the early measurement results. In this way, the BS can expedite the CA configuration for the UE compared to the conventional procedure. However, current early measurement technology does not resolve issues including how to implement an early measurement for a RRC resume procedure which transits a UE from a RRC inactive state to a RRC connected state, and how to configure an early measurement configuration to support a fast MR-DC configuration, and how to support early measurement in 3GPP 5G NR (New Radio). Therefore, there exists a need to develop a method and apparatus for implement early measurement specifically for RRC resume procedure so as to support fast MR-DC configuration and to support early measurement in 5G-NR.

In one embodiment, a method for performing an early measurement by a first wireless communication node, includes: receiving a first message from a second wireless communication node, wherein the first message comprises early measurement configuration of one of the following: at least one first carrier frequency and at least one first frequency band; and performing an early measurement according to the early measurement configuration, when the first wireless communication node supports one of the following: a carrier-aggregation (CA) configuration and a dual-connectivity (DC) configuration, between one of the following: a serving carrier and a second frequency band of a serving cell of the second wireless communication node, and one of the following: the at least one first carrier frequency and the at least one first frequency band.

In a further embodiment, a method for configuring an early measurement by a first wireless communication node, includes: transmitting a first message to a second wireless communication node, wherein the first message comprises an early measurement configuration of one of the following: at least one first carrier frequency and at least one first frequency band, wherein the early measurement configuration is used for the second wireless communication node to perform an early measurement, when the second wireless communication node supports one of the following: a carrier-aggregation (CA) configuration and a dual-connectivity (DC) configuration, between one of the following: a serving carrier and a second frequency band of a serving cell of the first wireless communication node, and one of the following: the at least one first carrier frequency and the at least one first frequency band.

In a further embodiment, a method performing an early measurement by a first wireless communication node, includes: receiving a first message from a second wireless communication node; and performing an early measurement according to the first message, wherein the first message comprises early measurement configuration for a first frequency set, wherein the first frequency set comprises at least one of the following: a first carrier frequency, a list of first carrier frequencies, a first frequency band, and a list of first frequency bands, wherein the early measurement configuration comprises at least one of the following of the first frequency set: an configuration applicability indicator, a measurement cell, a validity area, a Radio Access Technology (RAT) type, a RRC (Radio Resource Control) state of the first wireless communication node, and a Public Land Mobile Network Identifier (PLMN ID).

In a further embodiment, a method for configuring an early measurement by a first wireless communication node, includes: transmitting a first message to a second wireless communication node, wherein the first message comprises early measurement configuration for a first frequency set, wherein the first frequency set comprises at least one of the following: a first carrier frequency, a list of first carrier frequencies, a first frequency band, and a list of first frequency bands, wherein the early measurement configuration is used for the second wireless communication node to perform an early measurement, wherein the early measurement configuration comprises at least one of the following of the first frequency set: an configuration applicability indicator, a measurement cell, a validity area, a Radio Access Technology (RAT) type, a RRC (Radio Resource Control) state of the first wireless communication node, and a Public Land Mobile Network Identifier (PLMN ID).

In a further embodiment, a method for performing an early measurement by a first wireless communication node, includes: transmitting a first message to a second wireless communication node; receiving a second message from the second wireless communication node; and transmitting a third message to a second wireless communication node, wherein the first message is configured to indicate to the second wireless communication node availability of early measurement results, wherein the second message is configured to request the early measurement results from the first wireless communication node, and wherein the third message comprises the early measurement results.

In a further embodiment, a method for configuring an early measurement by a first wireless communication node, includes: receiving a first message from a second wireless communication node; transmitting a second message to the second wireless communication node; and receiving a third message from a second wireless communication node, wherein the first message is configured to indicate to the first wireless communication node availability of early measurement results, wherein the second message is configured to request the early measurement results from the second wireless communication node, and wherein the third message comprises the early measurement results.

Yet in another embodiment, a computing device comprising at least one processor and a memory coupled to the processor, the at least one processor configured to carry out the method.

Yet, in another embodiment, a non-transitory computer-readable medium having stored thereon computer-executable instructions for carrying out the method.

### BRIEF DESCRIPTION OF THE DRAWINGS

Aspects of the present disclosure are best understood from the following detailed description when read with the accompanying figures. It is noted that various features are not necessarily drawn to scale. In fact, the dimensions and geometries of the various features may be arbitrarily increased or reduced for clarity of discussion.
FIG. 1A illustrates an exemplary wireless communication network, in accordance with some embodiments of the present disclosure.
FIG. 1B illustrates a block diagram of an exemplary wireless communication system, in accordance with some embodiments of the present disclosure.
FIG. 2 illustrates a method for configuring an early measurement, in accordance with some embodiments of the present disclosure.
FIG. 3 illustrates a method for configuring an early measurement, in accordance with some embodiments of the present disclosure.
FIG. 4 illustrates a method for configuring an early measurement, in accordance with some embodiments of the present disclosure.

### DETAILED DESCRIPTION OF EXEMPLARY EMBODIMENTS

Various exemplary embodiments of the invention are described below with reference to the accompanying figures to enable a person of ordinary skill in the art to make and use the invention. As would be apparent to those of ordinary skill in the art, after reading the present disclosure, various changes or modifications to the examples described herein can be made without departing from the scope of the invention. Thus, the present invention is not limited to the exemplary embodiments and applications described or illustrated herein. Additionally, the specific order or hierarchy of steps in the methods disclosed herein are merely exemplary approaches. Based upon design preferences, the specific order or hierarchy of steps of the disclosed methods or processes can be re-arranged while remaining within the scope of the present invention. Thus, those of ordinary skill in the art will understand that the methods and techniques disclosed herein present various steps or acts in a sample order, and the invention is not limited to the specific order or hierarchy presented unless expressly stated otherwise.

Embodiments of the present invention are described in detail with reference to the accompanying drawings. The same or similar components may be designated by the same or similar reference numerals although they are illustrated in different drawings. Detailed descriptions of constructions or processes well-known in the art may be omitted to avoid obscuring the subject matter of the present invention. Further, the terms are defined in consideration of their functionality in embodiment of the present invention, and may vary according to the intention of a user or an operator, usage, etc. Therefore, the definition should be made on the basis of the overall content of the present specification.

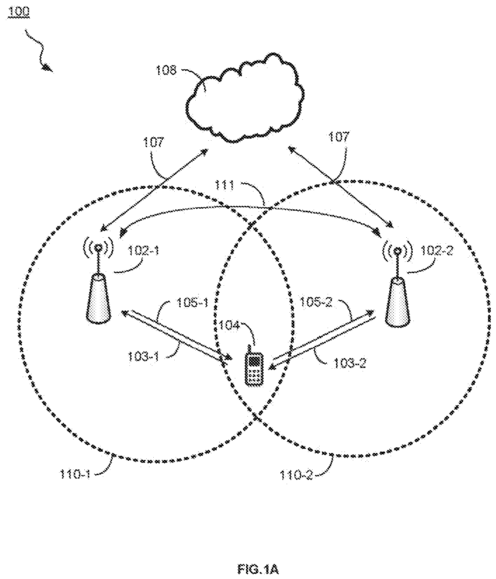

Figure 1A illustrates an exemplary wireless communication network 100, in accordance with some embodiments of the present disclosure. In a wireless communication system, a network side communication node or a base station (BS) 102 can be a node B, an E-UTRA Node B (also known as Evolved Node B, eNodeB or eNB), a gNodeB (also known as gNB) in new radio (NR) technology, a pico station, a femto station, or the like. A terminal side communication device or a user equipment (UE) 104 can be a long range communication system like a mobile phone, a smart phone, a personal digital assistant (PDA), tablet, laptop computer, or a short range communication system such as, for example a wearable device, a vehicle with a vehicular communication system and the like. A network communication node and a terminal side communication device are represented by a BS 102 and a UE 104, respectively, and in all the embodiments in this disclosure hereafter, and are generally referred to as "communication nodes" and "communication device" herein. Such communication nodes and communication devices may be capable of wireless and/or wired communications, in accordance with various embodiments of the invention. It is noted that all the embodiments are merely preferred examples, and are not intended to limit the present disclosure. Accordingly, it is understood that the system may include any desired combination of BSs 102 and UEs 104, while remaining within the scope of the present disclosure.

Referring to Figure 1A, the wireless communication network 100 includes a first BS 102-1, a second BS 102-2, and a UE 104. In some embodiments, the UE 104 forms direct communication (i.e., uplink) channels 103-1 and 103-2 with the first BS 102-1 and the second BS 102-2, respectively. In some embodiments, the UE 104 also forms direct communication (i.e., downlink) channels 105-1 and 105-2 with the first BS 102-1 and the second BS 102-2, respectively. The direct communication channels between the UE 104 and the BS 102 can be through interfaces such as an Uu interface, which is also known as E-UTRA air interface. In some embodiments, the UE 104 comprises a plurality of transceivers which enables the UE 104 to support dual connectivity so as to receive data simultaneously from the first BS 102-1 and the second BS 102-2. The first and second BS 102-1 and 102-2 each is connected to a core network (CN) 108 through an external interface 107, e.g., an lu interface, or an NG interface. In some other embodiment, the first BS 102-1 (gNB) is a Master Node (MN), which is connected to the CN 108 and the second BS 102-2 (gNB) is a Secondary Node (SN), which is also connected to the CN 108.

In some other embodiments, when the first BS 102-1 and the second BS 102-2 each is a gNB, the direct communication between the first BS 102-1 and the second BS 102-2 is through an Xn interface. The first BS 102-1 and the second BS 102-2 are neighboring BSs. A first serving cell 110-1 is covered by the first BS 102-1 and the second serving cell 110-2 is covered by the second BS 102-2. In some embodiments, the first cell 110-1 is a primary cell of the MN, known as PCell, and the second cell 110-2 is a primary cell of the SN, known as PSCell. In some embodiments, the first cell 110-1 and the second cell 110-2 are neighboring cells.

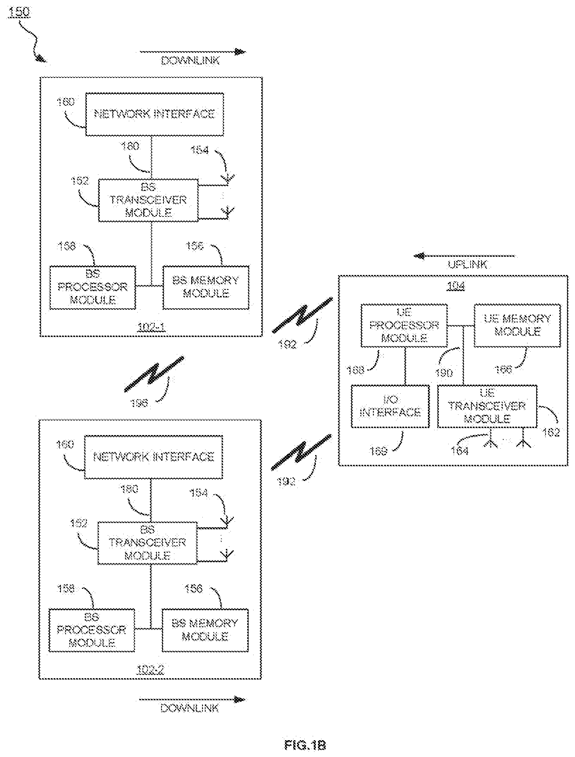

Figure 1B illustrates a block diagram of an exemplary wireless communication system 150, in accordance with some embodiments of the present disclosure. The system 150 may include components and elements configured to support known or conventional operating features that need not be described in detail herein. In some embodiments, the system 150 can be used to transmit and receive data symbols in a wireless communication environment such as the wireless communication network 100 of Figure 1A, as described above.

The system 150 generally includes a first BS 102-1, a second 102-2, and a UE 104, collectively referred to as BS 102 and UE 104 below for ease of discussion. The first BS 102-1 and the second BS 102-2 each comprises a BS transceiver module 152, a BS antenna array 154, a BS memory module 156, a BS processor module 158, and a network interface 160. In the illustrated embodiment, each module of the BS 102 are coupled and interconnected with one another as necessary via a data communication bus 180. The UE 104 comprises a UE transceiver module 162, a UE antenna 164, a UE memory module 166, a UE processor module 168, and an I/O interface 169. In the illustrated embodiment, each module of the UE 104 are coupled and interconnected with one another as necessary via a date communication bus 190. The BS 102 communicates with the UE 104 via a communication channel 192, which can be any wireless channel or other medium known in the art suitable for transmission of data as described herein.

As would be understood by persons of ordinary skill in the art, the system 150 may further include any number of modules other than the modules shown in Figure 1B. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software depends upon the particular application and design constraints imposed on the overall system. Those familiar with the concepts described herein may implement such functionality in a suitable manner for each particular application, but such implementation decisions should not be interpreted as limiting the scope of the present invention.

A wireless transmission from a transmitting antenna of the UE 104 to a receiving antenna of the BS 102 is known as an uplink (UL) transmission, and a wireless transmission from a transmitting antenna of the BS 102 to a receiving antenna of the UE 104 is known as a downlink (DL) transmission. In accordance with some embodiments, the UE transceiver 162 may be referred to herein as an "uplink" transceiver 162 that includes a RF transmitter and receiver circuitry that are each coupled to the UE antenna 164. A duplex switch (not shown) may alternatively couple the uplink transmitter or receiver to the uplink antenna in time duplex fashion. Similarly, in accordance with some embodiments, the BS transceiver 152 may be referred to herein as a "downlink" transceiver 152 that includes RF transmitter and receiver circuitry that are each coupled to the antenna array 154. A downlink duplex switch may alternatively couple the downlink transmitter or receiver to the downlink antenna array 154 in time duplex fashion. The operations of the two transceivers 152 and 162 are coordinated in time such that the uplink receiver is coupled to the uplink UE antenna 164 for reception of transmissions over the wireless communication channel 192 at the same time that the downlink transmitter is coupled to the downlink antenna array 154. Preferably, there is close synchronization timing with only a minimal guard time between changes in duplex direction. The UE transceiver 162 communicates through the UE antenna 164 with the BS 102 via the wireless communication channel 192. The BS transceiver 152 communications through the BS antenna 154 of a BS (e.g., the first BS 102-1) with the other BS (e.g., the second BS 102-2) via a wireless communication channel 196. The wireless communication channel 196 can be any wireless channel or other medium known in the art suitable for direct communication between BSs.

The UE transceiver 162 and the BS transceiver 152 are configured to communicate via the wireless data communication channel 192, and cooperate with a suitably configured RF antenna arrangement 154/164 that can support a particular wireless communication protocol and modulation scheme. In some exemplary embodiments, the UE transceiver 162 and the BS transceiver 152 are configured to support industry standards such as the Long Term Evolution (LTE) and emerging 5G standards (e.g., NR), and the like. It is understood, however, that the invention is not necessarily limited in application to a particular standard and associated protocols. Rather, the UE transceiver 162 and the BS transceiver 152 may be configured to support alternate, or additional, wireless data communication protocols, including future standards or variations thereof.

The processor modules 158 and 168 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor module may be realized as a microprocessor, a controller, a microcontroller, a state machine, or the like. A processor module may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 158 and 168, respectively, or in any practical combination thereof. The memory modules 156 and 166 may be realized as RAM memory, flash memory, ROM memory, EPROM memory, EEPROM memory, registers, a hard disk, a removable disk, a CD-ROM, or any other form of storage medium known in the art. In this regard, the memory modules 156 and 166 may be coupled to the processor modules 158 and 168, respectively, such that the processors modules 158 and 168 can read information from, and write information to, memory modules 156 and 166, respectively. The memory modules 156 and 166 may also be integrated into their respective processor modules 158 and 168. In some embodiments, the memory modules 156 and 166 may each include a cache memory for storing temporary variables or other intermediate information during execution of instructions to be executed by processor modules 158 and 168, respectively. The memory modules 156 and 166 may also each include non-volatile memory for storing instructions to be executed by the processor modules 158 and 168, respectively.

The network interface 160 generally represents the hardware, software, firmware, processing logic, and/or other components of the base station 102 that enable bi-directional communication between BS transceiver 152 and other network components and communication nodes configured to communication with the BS 102. For example, network interface 160 may be configured to support internet or WiMAX traffic. In a typical deployment, without limitation, network interface 160 provides an 802.3 Ethernet interface such that BS transceiver 152 can communicate with a conventional Ethernet based computer network. In this manner, the network interface 160 may include a physical interface for connection to the computer network (e.g., Mobile Switching Center (MSC)). The terms "configured for" or "configured to" as used herein with respect to a specified operation or function refers to a device, component, circuit, structure, machine, signal, etc. that is physically constructed, programmed, formatted and/or arranged to perform the specified operation or function. The network interface 160 could allow the BS 102 to communicate with other BSs or a CN over a wired or wireless connection.

Referring again to Figure 1A, as mentioned above, the BS 102 repeatedly broadcasts system information associated with the BS 102 to one or more UEs 104 so as to allow the UEs 104 to access the network within the cells (e.g., 110-1 for the first BS 102-1 and 110-2 for the second BS 102-2) where the BS 102 is located, and in general, to operate properly within the cell. Plural information such as, for example, downlink and uplink cell bandwidths, downlink and uplink configuration, cell information, configuration for random access, etc., can be included in the system information, which will be discussed in further detail below. Typically, the BS 102 broadcasts a first signal carrying some major system information, for example, configuration of the cell 110 through a PBCH (Physical Broadcast Channel). For purposes of clarity of illustration, such a broadcasted first signal is herein referred to as "first broadcast signal." It is noted that the BS 102 may subsequently broadcast one or more signals carrying some other system information through respective channels (e.g., a Physical Downlink Shared Channel (PDSCH)).

Referring again to Figure 1B, in some embodiments, the major system information carried by the first broadcast signal may be transmitted by the BS 102 in a symbol format via the communication channel 192 (e.g., a PBCH). In accordance with some embodiments, an original form of the major system information may be presented as one or more sequences of digital bits and the one or more sequences of digital bits may be processed through plural steps (e.g., coding, scrambling, modulation, mapping steps, etc.), all of which can be processed by the BS processor module 158, to become the first broadcast signal. Similarly, when the UE 104 receives the first broadcast signal (in the symbol format) using the UE transceiver 162, in accordance with some embodiments, the UE processor module 168 may perform plural steps (de-mapping, demodulation, decoding steps, etc.) to estimate the major system information such as, for example, bit locations, bit numbers, etc., of the bits of the major system information. The UE processor module 168 is also coupled to the I/O interface 169, which provides the UE 104 with the ability to connect to other devices such as computers. The I/O interface 169 is the communication path between these accessories and the UE processor module 168.

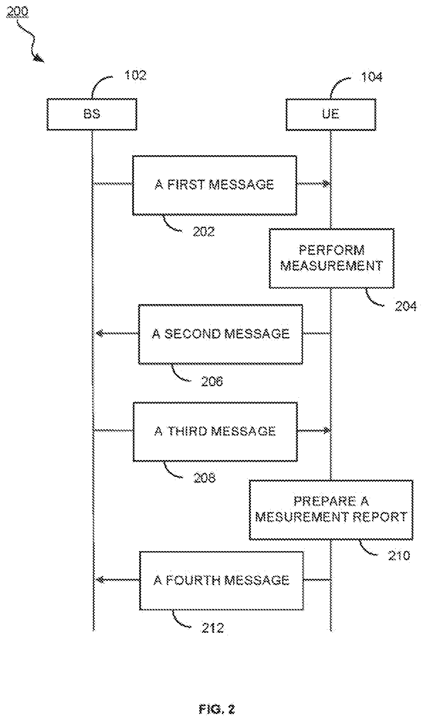

Figure 2 illustrates a method 200 for configuring early measurement, in accordance with some embodiments of the present disclosure. It is understood that additional operations may be provided before, during, and after the method 200 of Figure 2, and that some operations may be omitted or reordered. The communication system in the illustrated embodiment comprises a BS 102. In the illustrated embodiments, a UE 104 is in one of at least one serving cell covered by the BS 102, i.e., the UE 104 is in connection with the BS 102. In some embodiments, the BS 102 is a primary wireless communication node. It should be noted that any numbers of BS 102 can be used and are within the scope of this invention.

The method 200 starts with operation 202 in which the BS 102 transmits a first message to the UE 104 according to some embodiments. In some embodiments, the first message is one of the following: a RRC (Radio Resource Control) release message and a system information message. In some embodiments, the system information is one of the following: system information block 4 (SIB4) in the NR system or system information block 5 (SIB5) in the LTE/E-UTRAN system.

In some embodiments, the first message comprises early measurement configuration, wherein the early measurement configuration comprises at least one table. In some embodiments, the early measurement configuration is configured by the BS 102 prior to the operation 202. In some embodiments, the at least one table each comprises at least one carrier frequency and at least one of the following parameters corresponding to the at least one carrier frequency: carrier frequency information, an allowed measurement bandwidth, a measurement cell list, a validity area, frequency band information, a report quantity, and a quality threshold value. In some embodiments, the carrier frequency information comprises one of the following: an absolute radio frequency channel number for an NR carrier (e.g., ARFCN-ValueNR) and an E-UTRAN ARFCN for an E-UTRAN carrier (e.g., ARFCN-ValueEUTRA). In some embodiments, the carrier frequency is a downlink carrier frequency. In some embodiments, the report quantity comprises at least one of the following: reference signal received power (RSRP), reference signal received quality (RSRQ), and signal-to-interference-plus-noise ratio (SINR). In some embodiments, the measurement cell list indicates a list of cells which the UE 104 is requested to measure and report during an early measurement. In some embodiments, the report quantity indicates which a measurement quantity the UE 104 is requested to report in an early measurement report. In some embodiments, the quality threshold indicates a quality threshold for reporting an early measurement in a measurement cell. In some embodiments, the first message further comprises a duration for performing an early measurement in one of the following RRC states: a RRC idle state and RRC inactive state.

In some embodiments, the frequency band information comprises information of a frequency range in which the carrier frequency is located (i.e., the carrier frequency belongs to the frequency band according to a frequency band definition). In some embodiments, the frequency band information comprises at least one frequency band information list, in which at least one carrier frequency and/or at least one cell belongs to. In some embodiment, the frequency band information comprises at least one frequency band information list indicating a list of frequency band and the frequency band represented by the carrier frequency. In some embodiments, the frequency band information represented by the carrier frequency is implicitly provided, i.e., not included in the frequency band list.

The method 200 continues with operation 204 in which the UE 104 performs measurement according to some embodiments. In some embodiments, the UE 104 performs measurement in one of the following RRC states: a RRC IDLE state or a RRC inactive state. In some embodiments, the UE 104 performs measurement according to the early measurement configuration in the first message received from the BS 102 and its own capability.

In some embodiments, when the early measurement configuration in the first message comprises at least one first carrier frequency and when the at least one first carrier frequency is located in a plurality of first frequency bands with a first frequency band information configured for the at least one first carrier frequency, the UE 104 performs an early measurement, when the UE 104 supports one of the following: a CA configuration and a DC configuration, between a second frequency band of the serving cell or a serving carrier of the BS 102 and the at least one of the plurality of first frequency band or the at least one first carrier frequency. In some embodiments, the at least one first carrier frequency is defined by a first carrier frequency information and a corresponding allowed measurement bandwidth.

In some embodiments, the second frequency band of the serving cell of the BS 102 is a frequency band selected by the UE 104 to represent a carrier frequency of the serving cell. In some embodiments, the second frequency band is one of third frequency bands to which the carrier frequency of the serving cell of the BS 102 belongs and are indicated in system information of the serving cell, and can be supported by the UE 104. In some embodiments, the second frequency band is one of the third frequency band which are indicated in system information block 1 (SIB1) of the serving cell of the BS 102.

The method 200 continues with operation 206 in which a second message is received from the UE 104 by the BS 102 according to some embodiments. In some embodiments, the RRC message transmitted from the UE 104 to the BS 102 is one of the following: a RRC setup complete message, a RRC resume request message, and a RRC resume complete message. In some embodiments, the UE 104 indicates that early measurement results of the corresponding carrier frequency are available in the second message. In some embodiments, the second message is transmitted when the UE 104 receives system information in the serving cell indicating the BS 102 is capable for handling the early measurement results.

The method 200 continues with operation 208 in which a third message is transmitted from the BS 102 to the UE 104 according to some embodiments. In some embodiments, the third message is a UEInformatRequest message. In some embodiments, the third message is to request the early measurement results from the UE 104.

The method 200 continues with operation 210 in which a fourth message is received by the BS 102 from the UE 104 according to some embodiments. In some embodiments, the fourth message is a UEInformationResponse message. In some embodiments, the fourth message comprises a report with the early measurement results determined by the UE 104 according to the third message. In some embodiments, the report comprises a list of carrier frequencies, corresponding cell IDs and corresponding early measurement results.

The method 200 continues with operation 212 in which a fifth message is transmitted by the BS 102 to the UE 104 according to some embodiments. In some embodiments, the fifth message is to reconfigure the UE 104 with at least one of the following: the CA configuration and the DC configuration. In some embodiments, the fifth message is a RRC reconfiguration message. In some embodiments, the UE 104 configured with the CA configuration comprises a set of serving cells configured along with its primary cell (P-Cell) in an aggregation mode. In some embodiments, the UE 104 with the DC configuration is configured with additional set of serving cells as a secondary cell group (SCG) besides a master cell group (MCG). In some embodiments, both radio connections for the SCG and MCG are used for communication between the UE 104 and the BS 102.

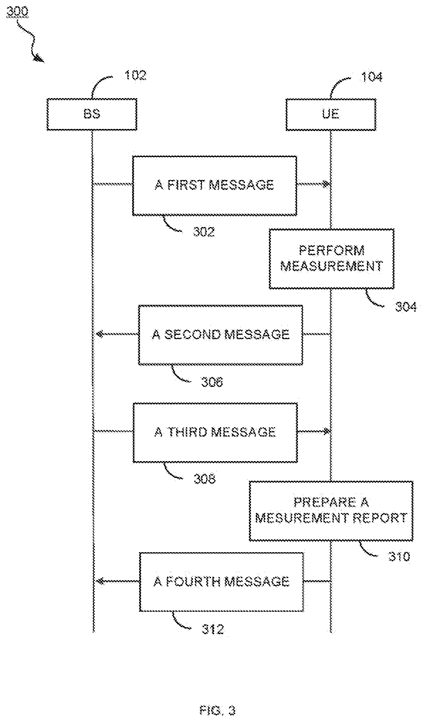

Figure 3 illustrates a method 300 for configuring early measurement, in accordance with some embodiments of the present disclosure. It is understood that additional operations may be provided before, during, and after the method 300 of Figure 3, and that some operations may be omitted or reordered. The communication system in the illustrated embodiment comprises a BS 102. In the illustrated embodiments, a UE 104 is in one of at least one serving cell covered by the BS 102, i.e., the UE 104 is in connection with the BS 102. In some embodiments, the BS 102 is a primary wireless communication node. It should be noted that any numbers of BS 102 can be used and are within the scope of this invention.

The method 300 starts with operation 302 in which the BS 102 transmits a first message to the UE 104 according to some embodiments. In some embodiments, the first message is one of the following: a UE dedicated RRC (Radio Resource Control) message and a system information message. In some embodiments, the UE dedicated RRC message can be a RRC release message transmitted from the BS 102 to the UE 104. In some embodiments, the UE dedicated RRC message is configured to transit the UE 104 from RRC CONNECTED state to RRC IDLE state or RRC INACTIVE state. In some other embodiments, the UE dedicated RRC message is a RRC reconfiguration message, wherein the RRC reconfiguration message is used to reconfigure the UE 104 when the UE 104 is in RRC CONNECTED state. In some embodiments, the system information is one of the following: system information block 4 (SIB4) in the NR system or system information block 5 (SIB5) in the LTE/E-UTRAN system.

In some embodiments, the first message comprises early measurement configuration, wherein the early measurement configuration comprises at least one table. In some embodiments, the early measurement configuration is configured by the BS 102 prior to the operation 302. In some embodiments, the at least one table each comprises at least one carrier frequency and at least one of the following parameters corresponding to the at least one carrier frequency: carrier frequency information, an applicability indicator, frequency band information, an allowed measurement bandwidth, a measurement cell list, a validity area, a RAT (Radio Access Technology) type, a RRC (Radio Resource Control) state of the UE 104, a Public Land Mobile Network Identifier (PLMN ID), a report priority, a report quantity, and a quality threshold value. In some embodiments, the at least one carrier frequency each is applicable to at least one of the following: CA configuration and DC configuration. In some embodiments, the carrier frequency information comprises one of the following: an absolute radio frequency channel number for an NR carrier (e.g., ARFCN-ValueNR) and an E-UTRAN ARFCN for an E-UTRAN carrier (e.g., ARFCN-ValueEUTRA). In some embodiments, the report quantity comprises at least one of the following: reference signal received power (RSRP) and reference signal received quality (RSRQ). In some embodiments, the frequency band information comprises information of a frequency range in which the carrier frequency is located. In some embodiment, the frequency band information comprise at least one frequency band information list indicating list of frequency band and the frequency band represented by the carrier frequency.

In some embodiments, the first message comprises at least one of the following: a first table for the CA configuration, a second table for the DC configuration, and a third table for both the CA and DC configurations. In some embodiments, the first, the second, and the third tables each comprises at least one carrier frequency and at least one of the following parameters corresponding to the at least one carrier frequency: carrier frequency information, an applicability indicator, a frequency band information, an allowed measurement bandwidth, a measurement cell list, a validity area, a report quantity, and a quality threshold value. In some embodiments, the first, the second, and the third tables can be defined and differentiated by one of the following: a name of the table and a value of an explicit indicator.

In some embodiments, the applicability indicator of a corresponding carrier frequency has at least two values and is used to indicate whether the corresponding carrier frequency is applicable to at least one of the following: the DC configuration and the CA configuration. In some embodiments, the 2 values of the applicability indicator are "for DC" and "for CA". In some embodiments, the applicability indicator has 3 values including "for DC", "for CA", and "for both DC and CA."

In some embodiments, the frequency band information in the at least one table of the first message can be indicated that it is applicable to at least one of the following: the DC configuration and the CA configuration. In some embodiments, the frequency band information for different configurations can be defined and differentiated by one of the following: a name and an explicit indicator. In some embodiments, an indicator can be used to indicate that a frequency band is applicable to at least one of the following: the DC configuration and the CA configuration. In some embodiments, the first message comprises at least one frequency band information list, in which at least one carrier frequency is located. In some embodiments, the at least one frequency band information list each is applicable to one of the following: the DC configuration and the CA configuration. In some embodiments, one frequency band is in at least two different frequency band lists for different configurations (i.e., DC and CA configurations), indicating that the frequency band can be applicable to both the DC and the CA configurations.

In some embodiments, at least one of the measurement cell list or the validity area is configured to a carrier frequency or a frequency band. In some embodiments, the measurement cell list or the validity area of a corresponding carrier frequency or a corresponding frequency band in the at least one table of the first message is applicable to at least one of the following: the DC configuration and the CA configuration. In some embodiments, the validity area in the at least one table can be indicated as applicable for at least one of the following: the DC configuration and the CA configuration. In some embodiments, the measurement cell information can indicates that a cell is applicable to at least one of the following: the DC configuration and the CA configuration.

In some embodiments, a carrier frequency or a frequency band comprises two different sets of early measurement configurations in the at least one table. In some embodiments, the two different sets of early measurement configurations are applicable to the DC configuration and applicable to the CA configuration, respectively, when the carrier frequency or the frequency band in the at least one table of the first message is indicated as applicable to both the DC configuration and the CA configuration according to the embodiments discussed above.

In some embodiments, the at least one table each comprises a Radio Access Technology (RAT) type of a corresponding carrier frequency. In some embodiments, the RAT type of a corresponding carrier frequency can be indicated by a name of the at least one table. In some embodiments, the corresponding carrier frequency is a first RAT type, wherein the first RAT type is different from a second RAT type of the serving cell of the BS 102. For example, the first message comprises a list of carrier frequencies of a NR type in an E-UTRAN/LTE cell of the BS 102. Similarly, the first message comprises a list of carrier frequencies of an E-UTRAN/LTE type in an NR cell of the BS 102. In some embodiments, the first message is one of the following: system information and a RRC release message.

In some embodiments, the at least one table each comprises a RRC state of the UE 104 for one of the following parameters: a carrier frequency list, a carrier frequency, a frequency band in which the carrier frequency is located, a validity area, and a list of measurement cell information. In some embodiments, the RRC state of the UE 104 can be indicated by a name of the parameter. In some embodiments, the first message further comprises an indicator, the value of which can be used to indicate a relationship between parameters in the at least one table and the RRC state of the UE 104. In some embodiments, the default value of the indicator is predefined by the system as at least one of the following: applicable to RRC IDLE and applicable to RRC INACTIVE. For example, when the value of the indicator of a parameter in the table is set to "applicable to RRC IDLE", the corresponding early measurement configuration is used for the UE 104 to perform an early measurement when the UE 104 is in the RRC IDLE state; when the value of the indicator of a parameter in the table is set to "applicable to RRC INACTIVE", the corresponding early measurement configuration is used for the UE 104 to perform an early measurement when the UE 104 is in the RRC INACTIVE state; and when the value of the indicator of a parameter is set to "applicable to RRC IDLE and RRC INACTIVE", the corresponding early measurement configuration can be used for the UE 104 to perform an early measurement when the UE 104 is in the RRC IDLE state or the RRC INACTIVE state.

In some embodiments, the at least one table each comprises one of the following: at least one Public Land Mobile Network Identifier (PLMN ID) and at least one index of a PLMN ID list. In some embodiments, each of the at least one early measurement configuration in the first message corresponds to one of the following: at least one PLMN ID and at least one index of a PLMN ID list. In some embodiments, each of the at least one carrier frequency in the at least one table corresponds to one of the following: at least one PLMN ID and at least one index of a PLMN ID list. In some embodiments, the at least one validity area or the at least one cell list for early measurement in the at least one table corresponds to one of the following: at least one PLMN ID and at least one index of a PLMN ID list. In some other embodiments, the at least one frequency band list in the at least one table corresponds to one of the following: at least one PLMN ID and at least one index of a PLMN ID list. In some embodiments, the at least one frequency band list each comprises a list of frequency band indicators and parameters for early measurement in corresponding frequency band. In some embodiments, the frequency band indicator is used to indicate frequency bands in which the corresponding carrier frequency is located. In some embodiments, the PLMN ID and the PLMN ID list are transmitted in a system information block, e.g., SIB1.

In some embodiments, the at least one table in the first message further comprises a priority value of one of the following: a corresponding carrier frequency and a cell. In some embodiments, the priority value indicates the priority of the carrier frequency when the UE 104 reports an early measurement result to the BS 102. In some embodiments, the priority value has 1 bit. In some embodiments, the priority value is in a predefined range. In some embodiments, the priority value has a predefined default value, e.g., "low priority".

In some embodiments, the table further comprises at least one of the following parameters for a corresponding carrier frequency to support beam measurement: IE ReportQuantityRsIndexes, IE maxNrofRsIndexesToReport, and includeBeamMeasurements. In some embodiments, the IE ReportQuantityRsIndexes is a parameter to configure what quantity to be measured and reported. In some embodiments, the value of the IE ReportQuantityRsIndexes parameter is one of the following: RSRP, RSPQ and SINR. In some embodiments, the IE maxNrofRsIndexesToReport is a max number of measurement information per RS index to be included in the measurement report. In some embodiments, the includeBeamMeasurements is a parameter describing whether a beam measurement result should be included in the measurement result report. In some embodiments, the includeBeamMeasurements is a Boolean type. In some embodiments, the present of the includeBeamMeasurements indicates the beam measurement result is required in the measurement result report.

In some embodiments, the table further comprises at least one of the following parameters for a corresponding carrier frequency to support SS (synchronization signal) block-based measurement: IE SMTC-SSB, ssbSubcarrierSpacing, IE ssb-toMeasure, IE absThreshSS-BlocksConsolidation, IE nrofSS-BlocksToAverage, and deriveSSB-IndexFromCell. In some embodiments, the IE SMTC-SSB is a parameter for configuring a measurement timing, i.e., timing occasions at which the UE 104 measures SSBs. In some embodiments, the ssbSubcarrierSpacing is a parameter for determining a sub-carrier spacing of a reference signal to be measured. In some embodiments, the IE ssb-toMeasure is a parameter for configuring at least one SS block to be measured. In some embodiments, the IE absThreshSS-BlocksConsolidation is a parameter for configuring a threshold for consolidation of L1 measurement per RS index. In some embodiments, the IE nrofSS-BlocksToAverage is a parameter for configuring a number of SS blocks to average for cell measurement derivation. In some embodiments, the deriveSSB-IndexFromCell is a parameter for indicating whether a timing of a detected cell on a frequency can be used by the UE 104 to derive the SSB index of all neighboring cells on the frequency.

In some embodiments, the table further comprises at least one of the following parameters for a corresponding carrier frequency to support CSI-RS (Channel State Information-Reference Signal)-based measurement: refFreqCSI-RS, absThreshCIS-RS-Consolidation, and nrofCSInrofCSI-RS-ResourcesToAverage. In some embodiments, the refFreqCSI-RS is a parameter to configure Point A which is used for mapping a CSI-RS to physical resources, the absThreshCSI-RS-Consolidation is a parameter to configure absolute threshold for the consolidation of measurement results per CSI-RS resource(s) from L1 filter(s), the nrofCSInrofCSI-RS-ResourcesToAverage is a parameter to configure the maximum number of measurement results per beam based on CSI-RS resources to be averaged, a physical cell ID, a reference cell ID or an index to a list of cell ID, which is used to indicate the cell providing the timing reference for CSI-RS resources without a SSB..

The method 300 continues with operation 304 in which the UE 104 performs measurement according to some embodiments. In some embodiments, the UE 104 performs measurement in one of the following state: RRC IDLE state and RRC INACTIVE state. In some embodiments, the UE 104 performs measurement according to the early measurement configuration in the first message received from the BS 102 and its own capability.

In some embodiments, when at least one first carrier frequency or a first frequency band is configured as applicable to the CA configuration in an early measurement configuration of the first message, the UE 104 performs an early measurement according to the early measurement configuration of the at least one first carrier frequency or the first frequency band, when the UE 104 supports the CA configuration between one of the following: serving carrier and a second frequency band of the serving cell of the BS 102 and one of the following: the at least one first carrier frequency and the first frequency band. In some embodiments, the at least one first carrier frequency is defined by a first carrier frequency and a first allowed measurement bandwidth.

In some embodiments, when at least one first carrier frequency or a first frequency band is configured as applicable to the DC configuration in an early measurement configuration of the first message, the UE 104 performs an early measurement according to the early measurement configuration of the at least one first carrier frequency or the first frequency band, when the UE 104 supports the DC configuration between one of the following: a serving carrier and a second frequency band of the serving cell of the BS 102 and one of the following: the at least one first carrier frequency and the at least one first frequency band. In some embodiments, the at least one first carrier frequency is defined by a first carrier frequency information and a first allowed measurement bandwidth.

In some embodiments, when at least one first carrier frequency or a first frequency band is configured as applicable to both the CA and DC configurations in an early measurement configuration of the first message, the UE 104 performs an early measurement according to one of the early measurement configuration of the at least one first carrier frequency or the first frequency band, when the UE 104 supports the CA or the DC configuration between one of the following: a serving carrier and a second frequency band of the serving cell of the BS 102 and one of the following: the at least one first carrier frequency and the first frequency band. In some embodiments, the at least one first carrier frequency is defined by a first carrier frequency information and a first allowed measurement bandwidth.

In some embodiments, when a validity area is configured in the first message, the UE 104 performs early measurement according to corresponding early measurement configuration of the validity area. In some embodiment, when a measurement cell information is configured in the first message, the UE 104 performs early measurement according to corresponding early measurement configuration of the measurement cell.

In some embodiments, when at least one first carrier frequency or a first frequency band has two different sets of early measurement configurations in the at least one table for the DC configuration and the CA configuration, respectively, and when the at least one first carrier frequency or the first frequency band in the at least one table of the first message is indicated as applicable to both the DC configuration and the CA configuration, the UE 104 selects an early measurement configuration and perform an early measurement according to its capability. Specifically, the UE 104 performs an early measurement according to the early measurement configuration of the at least one first carrier frequency or the first frequency band for the CA configuration, when the UE 104 supports the CA configuration between a second frequency band of the serving cell or the serving carrier and the at least one first carrier frequency or the first frequency band; the UE 104 performs an early measurement according to the early measurement configuration of the first carrier frequency or the first frequency band for the DC configuration, when the UE 104 supports the DC configuration between a second frequency band of the serving cell or the serving carrier, and the at least one first carrier frequency or the first frequency band; and the UE 104 selects one of the early measurement configurations, when the UE 104 supports both the DC and the CA configurations between a second frequency band of the serving cell or the serving carrier, and the first carrier frequency or the first frequency band. In some embodiments, the at least one first carrier frequency is defined by a first carrier frequency and a first allowed measurement bandwidth.

In some embodiments, when the early measurement configuration in the first message comprises at least one first carrier frequency or a first frequency band which is configured as applicable to one of the following: the CA configuration and the DC configuration, or at least one first carrier frequency or a first frequency band with a validity area which is configured as applicable to one of the following: the CA configuration and the DC configuration, the UE 104 performs an early measurement within the validity area according to one of the following: the CA configuration and the DC configuration of the at least one first carrier frequency, or the first frequency band, when the UE 104 supports the CA configuration between one of the following: at least one second carrier frequency and a second frequency band of the serving cell of the BS 102, and one of the following: the at least one first carrier frequency and the first frequency band. In some embodiments, the at least one first carrier frequency is defined by a first carrier frequency information and a first allowed measurement bandwidth. In some embodiments, the at least one second carrier frequency is defined by a second carrier frequency information and a second allowed measurement bandwidth.

In some embodiments, when the early measurement configuration in the first message comprises a first carrier frequency which is configured as applicable to both the CA and the DC configurations and when the first carrier frequency is located in a plurality of first frequency bands, the UE 104 performs an early measurement according to one of the plurality of first frequency band, when the UE 104 supports both the CA and the DC configurations between a second frequency band of the serving cell of the BS 102 and the one of the plurality of first frequency band.

In some embodiments, the second frequency band of the serving cell of the BS 102 is a frequency band selected by the UE 104 to represent a carrier frequency of the serving cell. In some embodiments, the second frequency band is one of third frequency bands of the serving cell of the BS 102. In some embodiments, the second frequency band comprises the second frequency of the serving cell. In some embodiments, the second frequency is supported by the UE 104 and is indicated by the BS 102 to the UE 104 through system information.

In some embodiments, the BS 102 can also indicate in system information that early measurement results on the first carrier frequency or the first frequency band that are applicable to at least one of the following: the CA configuration and DC configuration, can be processed. In some embodiments, the BS 102 can indicate in system information that the early measurement results which are applicable to at least one of the following: the CA configuration and DC configuration, can be processed. In some embodiments, the BS 102 can also indicate that the UE 104 indicates in a RRC message that whether the early measurement results applicable to CA or DC configuration are available. In some embodiments, a 2-bit indicator can be used. In some embodiments, 1 bit can be used to indicate the BS 102 can process the early measurement results applicable to the CA configuration, while 1 bit can be used to indicate the BS 102 can process the early measurement results applicable to the DC configuration.

In some embodiments, the measurement results applicable to the CA or DC configuration is one of the following: the measurement results of measurement performed by the UE 104 on the at least one first carrier frequency or the first frequency band that are applicable to the CA or DC configuration, the measurement results of the measurement performed by the UE 104 on the at least one first carrier frequency or the first frequency band within the corresponding validity area which is applicable to the CA or DC configuration, and the measurement results of the measurement performed by the UE 104 on a corresponding measurement cell list which are applicable to the CA or DC configuration, of the at least one first carrier frequency or the first frequency band.

In some embodiments, the BS 102 can also indicate in system information of the serving cell of the BS 102 that the early measurement results can be processed when the UE 104 is in at least one of following RRC states: a RRC idle state and a RRC inactive state . In some embodiments, the BS 102 can also indicate that the UE 104 indicates in a RRC message that whether the early measurement results are available when the UE 104 transits to a RRC connected state from one of following RRC states: the RRC idle state and the RRC inactive state.

In some embodiments, the BS 102 can also indicate in the system information of the serving cell of the BS 102 that the early measurement results of the carrier frequency of a second RAT type can be processed. In some embodiments, the BS 102 can also indicate that UE indicates in a RRC message that whether the early measurement results of a second RAT type are available.

In some embodiments, when the UE 104 is camping on the serving cell of the BS 102 with a first carrier frequency of a first RAT type, the UE 104 performs early measurement on a second carrier frequency of a second RAT type according to the early measurement configuration of the second carrier frequency in the first message sent from the BS 102, when the UE 104 support the DC configuration between the serving carrier or the first frequency band of the first RAT type of the serving cell and the second carrier frequency or the second frequency band of the second RAT type, respectively. For example, when the UE 104 is camped in a serving cell of the BS 102 with the first carrier frequency or the first frequency band of NR, the UE 104 performs early measurement on the second carrier frequency or the second frequency band of E-UTRAN/LTE when the UE 104 supports the DC configuration between the serving carrier or a first frequency band of the serving cell and the second carrier frequency or the second frequency band. Similarly, when the UE 104 is camped in a serving cell of the BS 102 with the first carrier frequency or the first frequency band of E-UTRAN/LTE, the UE 104 performs early measurement on the second carrier frequency or the second frequency band of NR only when the UE 104 supports the DC configuration between the serving carrier or the first frequency band of the serving cell and the second carrier frequency or the second frequency band, respectively. In some embodiments, the DC configuration is one of the following defined by 3GPP: NR-E-UTRA Dual Connectivity (NE-DC), E-UTRA-NR Dual Connectivity (EN-DC), and NG-RAN-E-UTRA-NR Dual Connectivity (NG-EN-DC). In some embodiments, the BS 102 can also indicate that the early measurement results of the second carrier frequency of the second RAT type which is different from the first RAT type of the serving cell, can be processed in system information.

In some embodiments, when the UE 104 is in a RRC IDLE state and the first message comprises an early measurement configuration for the UE 104 in a RRC IDLE state (e.g., a table with an indicator value of "applicable to RRC IDLE state"), the UE 104 performs an early measurement according to the early measurement configuration in the first message. In some embodiments, when the UE 104 is in a RRC INACTIVE state and the first message comprises an early measurement configuration for the UE 104 in a RRC INACTIVE state (e.g., a table with an indicator value of "applicable to RRC INACTIVE state"), the UE 104 performs an early measurement according to the early measurement configuration in the first message. In some embodiments, the BS 102 can also indicate that early measurement results determined by the UE 104 in one of the following state: a RRC IDLE state and a RRC INACTIVE state, can be processed in the system information.

In some embodiments, when the UE 104 selects or re-selects a cell of the BS 102 for camping or when the UE 104 updates system information of its camping cell, it updates a previous early measurement configuration according to a current early measurement configuration contained in the system information of the cell according to one of the following rules: when the UE 104 is configured with a first early measurement configuration containing a carrier frequency which is also contained in a second early measurement configuration in the system information of the cell, and the second early measurement configuration contains at least one CSI-RS based measurement configuration for at least one corresponding cell which is located in the carrier frequency, the UE 104 determines an updated first early measurement configuration by adding the at least one corresponding cell and the at least one CSI-RS based measurement configuration into the first early measurement configuration. In some embodiments, the updated first early measurement configuration is used by the UE 104 for the early measurement. In some embodiments, the carrier frequency contained in the first early measurement configuration or the second measurement configuration is the Point A which is used for mapping the CSI-RS to the physical resources.

For example, the UE 104 is configured with a carrier frequency A for an early measurement by the BS 102 through a RRC release message or system information in a cell. When the UE re-selects a cell C for camping, it reads the system information block which contains early measurement configuration. When the early measurement configuration in the system information block also contains configuration for the carrier frequency A, and it contains a list of cells which are located in the carrier frequency and are configured for a CSI-RS based measurement, the UE 104 adds the list of cells and their configurations as part of its early measurement configuration.

Using this method, the early measurement configurations in the UE 104 can be updated from the current serving cell with configurations of the cell to be measured which is configured with a CSI-RS based measurement configuration and is located in the carrier frequency for early measurement. The original early measurement configuration obtained from dedicated RRC messages or from system information of other cells can be also maintained, which improves configuration flexibility and signaling efficiency.

The method 300 continues with operation 306 in which a second message is received from the UE 104 by the BS 102 according to some embodiments. In some embodiments, an indicator can be added in the second message transmitted from the UE 104 to the BS 102. In some embodiments, the indicator is configured to indicate the early measurement results of the corresponding carrier frequency are available for at least one of the following: the CA configuration and the DC configuration. In some embodiments, the second message transmitted from the UE 104 to the BS 102 is one of the following: a RRC resume request message, a RRC setup request message, a RRC resume complete message, and a RRC setup complete message.

In some embodiments, the indicator is configured to indicate the early measurement results of carrier frequencies of the second RAT type are available in the RRC message. For example, when the UE 104 is camped in a serving cell of the BS 102 with a carrier frequency of an E-UTRAN/LTE type, the second message comprises an indicator indicating early measurement results for carrier frequencies of a NR type are available. In some embodiments, the second message transmitted from the UE 104 to the BS 102 is one of the following: a RRC resume request message, a RRC setup request message, a RRC resume complete message, and a RRC setup complete message.

In some embodiments, the indicator is configured to indicate the early measurement results are available. For example, when the UE 104 is initiating a RRC resume procedure from a RRC INACTIVE state or the UE 104 finishes a state transition from a RRC resume procedure, when the BS 102 indicates that it can process early measurement information or early measurement results of the UE 104 in a RRC INACTIVE state, and when the UE 104 has valid early measurement results according to the corresponding early measurement configuration, the UE 104 includes an indicator in a RRC message to inform the BS 102 that it has valid measurement results. In some embodiments, the RRC message transmitted from the UE 104 to the BS 102 is one of the following: a RRC resume request message and a RRC resume complete message.

For another example, when the UE 104 is initiating a RRC setup procedure from a RRC IDLE state or it finishes a state transition from a RRC setup procedure, when the BS 102 indicates in the system information that it can process early measurement information or early measurement results of the UE 104 in a RRC IDLE state, and when the UE 104 has valid early measurement results according to corresponding early measurement configuration, the UE 104 includes an indicator in a RRC message to inform the BS 102 that it has valid measurement results. In some embodiments, the RRC message transmitted from the UE 104 to the BS 102 is one of the following: a RRC setup request message, and a RRC setup complete message.

The method 300 continues with operation 308 in which a third message is transmitted by the BS 102 to the UE 104 according to some embodiments. In some embodiments, the third message is to request from the UE 104 the early measurement results which are applicable to at least one of the following: the DC configuration and the CA configuration. In some embodiments, the third message is a RRC message. In some embodiments, the third message transmitted from the BS 102 to the UE 104 is one of the following: a RRC resume message, a RRC setup message, and a UE information request message.

In some embodiments, the third message further comprises a report frequency number. In some embodiments, the report frequency number is used by the UE 104 to determine the number of carrier frequencies in an early measurement result report that is prepared by the UE 104. In some embodiments, the third message comprises separate report frequency numbers for the carrier frequencies for the DC configuration and for the CA configuration, respectively. In some embodiments, when a carrier frequency is applicable for both the DC and CA configurations, the measurement results of the carrier frequency is included in the early measurement result report at most once. In some embodiments, the report frequency number is transmitted separately from the BS 102 to the UE 104 in a RRC message, wherein the RRC message can be one of the following: a UE RRC release message, a RRC reconfiguration message, system information, and a measurement result request message. In some other embodiments, the report frequency number can be predefined by the system.

In some embodiments, the third message comprises the report frequency number of first carrier frequencies with the first RAT type, which is different from the second RAT type of the second frequency of the serving cell of the BS 102. In some embodiments, the report frequency number is transmitted separately from the BS 102 to the UE 104 in a RRC message, wherein the RRC message can be one of the following: a UE RRC release message, a RRC reconfiguration message, system information, and a measurement result request message. In some other embodiments, the report frequency number can be predefined by the system.

In some embodiments, the third message comprises separate report frequency numbers of carrier frequencies for the UE 104 in different RRC states, e.g., a RRC IDLE state and a RRC INACTIVE state. In some embodiments, the report frequency number is transmitted by the BS 102 to the UE 104 using one of the following: a UE RRC release message, a RRC reconfiguration message, system information, a measurement results request message (e.g., UE information request message), and a predefined value in the protocol.

In some embodiments, the third message is to request the early measurement results of the corresponding carrier frequencies of the first RAT type, wherein the first RAT type is different from the second RAT type of the carrier frequencies of the serving cell of the BS 102. In some embodiments, the third message is a RRC message. In some embodiments, the third message transmitted from the BS 102 to the UE 104 is one of the following: a RRC resume message, a RRC setup message, and a UE information request message.

In some embodiments, the third message also comprises priority values of corresponding carrier frequencies. In some embodiments, the priority values each indicates the priority of the carrier frequency when the UE 104 reports an early measurement result to the BS 102. In some embodiments, the priority value has 1 bit. In some embodiments, the priority value is in a predefined range. In some embodiments, the priority value has a predefined default value, e.g., "low priority". In some embodiments, the third message further comprises a reporting threshold value. The BS 102 can specify a priority value of a carrier frequency individually by a dedicated RRC message or for all the UEs in its coverage by system information.

The method 300 continues with operation 310 in which an early measurement result report is prepared by the UE 104 according to some embodiments. In some embodiments, the early measurement result report comprises early measurement results applicable for the CA or DC configuration, when the early measurement results applicable for the CA or DC configuration are requested respectively, in the third message by the BS 102.

In some embodiments, the early measurement result report comprises early measurement results on the first carrier frequency or the first frequency band applicable for both the CA and DC configurations, when the early measurement results on the first carrier frequency or the first frequency band applicable for the CA or DC configuration are requested in the third message by the BS 102. In some embodiments, the early measurement results on the first carrier frequency or the first frequency band applicable for the CA configuration and the DC configurations are prepared in one of the following: one early measurement result report or two separate early measurement result reports.

In some embodiments, the measurement result report comprises: at least one measurement result each comprising at least one of the following parameters: a physical cell ID, a carrier frequency on which the cell locates, RSRP results of the cell, RSRQ results of the cell, SNIR results of the cell. In some embodiments, the measurement result report comprises at least one measurement results each comprise at least one of the following parameters: a physical cell ID, a carrier frequency on which the cell locates, Cell level measurement results (e.g. RSRP, RSRQ, SINR) to be reported derived on SS/PBCH block measurements, Cell level measurement results (e.g. RSRP, RSRQ, SINR) to be reported derived from CSI-RS measurements, a list of measurement information per CSI-RS resource index of the cell, a list of measurement information per SSB index of a cell. In some embodiments, the measurement information per CSI-RS resources index comprises at least one of following parameters: CSI-RS resources index, and measurement results (e.g. RSRP, RSRQ, and SINR). In some embodiments, the measurement information per SSB index comprises at least one of following parameters: SSB index and measurement results (e.g. RSRP, RSRQ, and SINR).

In some embodiments, the UE 104 prepares the early measurement results of the carrier frequencies of the first RAT type according to the third message received from the BS 102, wherein the first RAT type is different from the second RAT type of the carrier frequency of the serving cell of the BS 102.

In some embodiments, the UE 104 can discard the early measurement results when the UE 104 performs an inter-RAT cell re-selection, i.e., the UE 104 reselects a second serving cell with a first RAT type different from a second RAT type of a previous serving cell. In some embodiments, the UE 104 further updates the early measurement configuration by reading the early measurement configuration from system information of the second cell with the first RAT type. In some embodiments, at least one of the aforementioned actions of UE 104 including: discarding the early measurement results, and updating the early measurement configuration after the UE 104 performs an inter-RAT cell re-selection, is determined by the BS 102 using an explicit indicator. In some embodiments, the explicit indicator is transmitted from the BS 102 to the UE 104 through a RRC message and system information of the second serving cell of the BS 102 which the UE 104 camps.

In some embodiments, the UE 104 is configured with a first early measurement configuration applicable for RRC IDLE state and a second early measurement configuration applicable for RRC INACTIVE state, when the UE 104 transits to RRC INACTIVE state. When the UE 104 maintains the RRC INACTIVE state, the UE 104 performs early measurement according to the second early measurement configuration applicable for the RRC INACTIVE state. When the UE 104 transits to the RRCI IDI.E state from the RRC INACTIVE state, e.g., a RAN-based notification area update procedure fails, the UE 104 performs an early measurement according to the first early measurement configuration applicable for the RRC IDLE state. In some embodiments, the UE 104 further discards the second early measurement configuration applicable to the RRC INACTIVE state and corresponding early measurement results. In some embodiments, the aforementioned actions is one of the following: determined by the BS 102 using an explicit indicator and predefined by the system. In some embodiments, the explicit indicator is transmitted from the BS 102 to the UE 104 through a RRC message and system information of the second serving cell of the BS 102 which the UE 104 camps.

In some embodiments, the UE 104 is not configured with the first early measurement configuration applicable for an RRC IDLE state, when the UE 104 transits to RRC INACTIVE state. In some embodiments, the UE 104 acquires the first early measurement configuration applicable for the RRC IDLE state from system information of the current serving cell and performs an early measurement according to the first early measurement configuration, when the UE 104 transits to the RRC IDLE state. In some embodiments, the UE 104 further discards the second early measurement configuration applicable to the RRC INACTIVE state and corresponding early measurement results if available. In some embodiments, the aforementioned actions is one of the following: determined by the BS 102 using an explicit indicator and predefined by the system. In some embodiments, the explicit indicator is transmitted from the BS 102 to the UE 104 through a RRC message and system information of the second serving cell of the BS 102 which the UE 104 camps.

In some embodiments, when the UE 104 performs a PLMN re-selection (i.e., select a different PLMN as its selected PLMN) in a RRC IDLE state or a RRC INACTIVE state, the UE 104 performs an early measurement according to an early measurement configuration previously obtained from the BS 102. The UE 104 further updates the early measurement configuration corresponding to the PLMN selected by the UE 104 by acquiring the early measurement configuration from system information of a current serving cell. In some embodiments, the BS 102 can indicates at least one of the following: when the UE 102 performs a PLMN re-selection and whether the UE 102 acquires early measurement configuration from system information of the serving cell the UE 104 camps. In some embodiments, the BS 102 indicates through one of the following: a RRC message and system information.

In some embodiments, the early measurement result report comprises measurement results for a first number of carrier frequencies. In some embodiments, the first number of carrier frequencies is equal to or smaller than the report frequency number in the third message. For example, when a first report frequency number (N) for carrier frequencies applicable to the CA configuration and a second report frequency number (M) for carrier frequencies applicable to the DC configuration are configured by the BS 102, the early measurement result report prepared by the UE 104 comprises a first number of measurement results of carrier frequencies applicable to the CA configuration is equal to or smaller than N and a second number of measurement results of carrier frequencies applicable to the DC configuration is equal to or smaller than M.

In some embodiments, the early measurement result report is prepared according to the priority values of the corresponding carrier frequencies. In some embodiments, the early measurement result report comprises measurement results of carrier frequencies with priority values equal to or higher than the reporting threshold value received from the BS 102. In some embodiments, the early measurement results of carrier frequencies are ordered according to the priority values in the early measurement result report. For example, a list of carrier frequencies of A, B and C is configured by the BS 102 in the first message, each of which has a priority value of 0, 2, and 1, respectively. The carrier frequencies meet the configured reporting threshold value. The early measurement result report comprises a first entry of the carrier frequency B with the highest priority value, a second entry of the carrier frequency C with the second highest priority value, and a third entry of the carrier frequency A with the lowest priority value.. The BS 102 can control the reporting of the measurement results from the UE 104. The BS 102 can optimize the signaling overhead used for measurement reporting.

The method 300 continues with operation 312 in which a fourth message is received from the UE 104 by the BS 102 according to some embodiments. In some embodiments, the fourth message comprises the early measurement result report determined by the UE 104 according to the third message. For example, when the BS 102 requests for the early measurement results for the corresponding carrier frequency for the CA configuration, the fourth message comprises the corresponding early measurement results for the corresponding carrier frequency for the CA configuration. When the BS 102 requests for the early measurement results of the corresponding carrier frequency for the CA configuration and DC configuration, the fourth message comprise the early measurement results of the corresponding carrier frequencies applicable to the CA configuration and the DC configuration. In some embodiments, when the fourth message comprises the early measurement results of the corresponding carrier frequency applicable to the CA configuration and the DC configuration, the fourth message further comprises one of the following: a single measurement report list and two separate measurement report lists with one for the DC configuration and one for the CA configuration.

In some embodiments, the fourth message is a RRC message. In some embodiments, the RRC message is one of the following: a RRC resume complete message, a RRC setup complete message, and a UE information response message according to the third message transmitted from the BS 102.

Using the method 300 presented above, the BS 102 can configure the early measurement configuration for carrier frequencies applicable to the CA configuration or/and the DC configuration. The UE 104 can optimize measurement according to its own capability. For example, when the UE 104 cannot support the DC configuration of a carrier frequency and the frequency of the current serving cell of the BS 102, the UE 104 can ignore this carrier frequency without measuring it. In this way, the power consumption of the UE 104 can be reduced.

Furthermore, the BS 102 can configure the early measurement configuration for carrier frequencies of a RAT type (i.e., inter-RAT carrier frequencies) that is different from that of the carrier frequency of the serving cell. For another example, the UE 104 only performs early measurement when the UE 104 can support the DC configuration between carrier frequencies of different RAT types and the BS 102 can indicate or request the early measurement results of the inter-RAT carrier frequencies according to the capability and deployment of the BS 102.

The BS 102 can configure early measurement for UE 104 in different RRC states (e.g., a RRC IDLE state and a RRC INACTIVE state), which improves the configuration flexibility and reduce power consumption. For example, in a RRC resume procedure, only early measurement for the CA configuration is required; and in a RRC setup procedure, early measurements for both the CA configuration and the DC configuration are required. In this case, the BS 102 can configure different early measurement for different procedures.

Using method 300, the BS can further optimize the measurement results report by indicating different report frequency number for measurement results of different scenarios, e.g. different report frequency number for measurement results for CA and DC. The BS can also optimize the measurement results by indicating frequency priority to a carrier frequency.

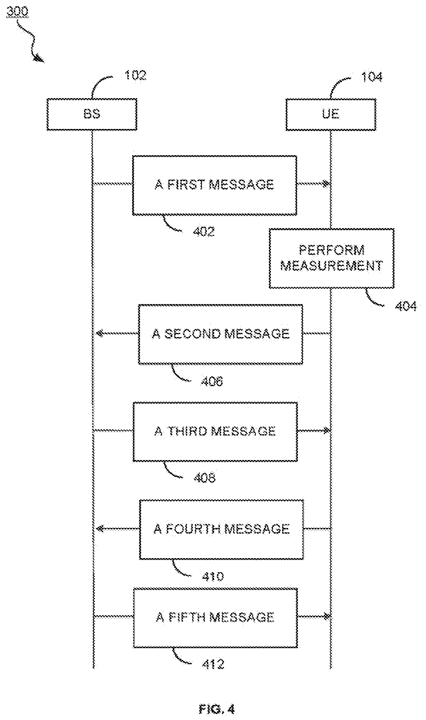

Figure 4 illustrates a method 400 for configuring early measurement, in accordance with some embodiments of the present disclosure. It is understood that additional operations may be provided before, during, and after the method 400 of Figure 4, and that some operations may be omitted or reordered. The communication system in the illustrated embodiment comprises a BS 102. In the illustrated embodiments, a UE 104 is in one of at least one serving cell covered by the BS 102, i.e., the UE 104 is in connection with the BS 102. In some embodiments, the BS 102 is a primary wireless communication node. It should be noted that any numbers of BS 102 can be used and are within the scope of this invention.

The method 400 starts with operation 402 in which the BS 102 transmits a first message to the UE 104 according to some embodiments. In some embodiments, the first message is one of the following: a RRC (radio resource control) release message and a system information message. In some embodiments, the system information is one of the following: system information block 4 (SIB4) in the NR system or system information block 5 (SIB5) in the LTE/E-UTRAN system.

In some embodiments, the first message comprises early measurement configuration, wherein the early measurement configuration comprises at least one table. In some embodiments, the early measurement configuration is configured by the BS 102 prior to the operation 302. In some embodiments, the at least one table each comprises at least one carrier frequency and at least one of the following parameters corresponding to the at least one carrier frequency: carrier frequency information, an allowed measurement bandwidth, a measurement cell list, a validity area, frequency band information, a report quantity, and a quality threshold value. In some embodiments, the carrier frequency information comprises one of the following: an absolute radio frequency channel number for an NR carrier (e.g., ARFCN-ValueNR) and an E-UTRAN ARFCN for an E-UTRAN carrier (e.g., ARFCN-ValueEUTRA). In some embodiments, the report quantity comprises at least one of the following: reference signal received power (RSRP) and reference signal received quality (RSRQ). In some embodiments, the frequency band information indicates information of a frequency range in which the carrier frequency is located.

The method 400 continues with operation 404 in which the UE 104 performs measurement according to some embodiments. In some embodiments, the UE 104 performs measurement in a RRC INACTIVE state. In some embodiments, the UE 104 performs measurement according to the early measurement configuration in the first message received from the BS 102 and its own capability.

The method 400 continues with operation 406 in which a second message is received from the UE 104 by the BS 102 according to some embodiments. In some embodiments, the RRC message transmitted from the UE 104 to the BS 102 is a RRC resume request message. In some embodiments, the UE 104 indicates that early measurement results of the corresponding carrier frequency are available in the second message.

In some embodiments, the second message comprises 1 bit to indicate availability of early measurement results. In some other embodiments, the second message comprises more than 1 bit which can be used to indicate more details. For example, one bit can be used to indicate that UE 104 has available early measurement results for carrier frequencies applicable to the CA configuration, and one bit can be used to indicate that UE 104 has available early measurement results for carrier frequencies applicable to the DC configuration.

The method 400 continues with operation 408 in which a third message is transmitted from the BS 102 to the UE 104 according to some embodiments. In some embodiments, the third message is a RRC resume message. In some embodiments, the third message is to request the early measurement results from the UE 104. In some embodiments, request indication can be included in the third message. For example, the early measurement results on inter-RAT frequencies or on carrier frequencies applicable to the DC and/or CA configurations can be further indicated in the third message.

The method 400 continues with operation 410 in which a fourth message is received by the BS 102 from the UE 104 according to some embodiments. In some embodiments, the fourth message is a RRC resume complete message. In some embodiments, the fourth message comprises the early measurement result report determined by the UE 104 according to the third message. For example, when the BS 102 requests for the early measurement results for the corresponding carrier frequency applicable for the CA configuration, the fourth message comprises the corresponding early measurement results for the corresponding carrier frequency applicable for the CA configuration. When the BS 102 requests for the early measurement results of the corresponding carrier frequency for the CA configuration and DC configuration, the fourth message comprise the early measurement results of the corresponding carrier frequencies applicable to the CA configuration or the DC configuration. In some embodiments, when the fourth message comprises the early measurement results of the corresponding carrier frequency applicable to the CA configuration and the DC configuration, the fourth message further comprises one of the following: a single measurement report list and two separate measurement report lists with one for the DC configuration and one for the CA configuration.

The method 400 continues with operation 412 in which a fifth message is transmitted by the BS 102 to the UE 104 according to some embodiments. In some embodiments, the fifth message is to reconfigure the UE 104 with the CA and/or DC configuration. In some embodiments, the fifth message is a RRC reconfiguration message. In some embodiments, the UE 104 with the CA configuration comprises a set of serving cells that are configured alongwith its primary cell (P-cell) in aggregation mode. In some embodiments, the UE 104 with the DC configuration is configured with two sets of serving cells, i.e., a master cell group (MCG) and a secondary cell group (SCG). In some embodiments, two radio connections for the MCG and SCG are maintained between the UE 104 and the BS 102.

While various embodiments of the invention have been described above, it should be understood that they have been presented by way of example only, and not by way of limitation. Likewise, the various diagrams may depict an example architectural or configuration, which are provided to enable persons of ordinary skill in the art to understand exemplary features and functions of the invention. Such persons would understand, however, that the invention is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two, which can be designed using source coding or some other technique), various forms of program or design code incorporating instructions (which can be referred to herein, for convenience, as "software" or a "software module), or combinations of both. To clearly illustrate this interchangeability of hardware and software, various illustrative components, blocks, modules, circuits, and steps have been described above generally in terms of their functionality. Whether such functionality is implemented as hardware, firmware or software, or a combination of these technique, depends upon the particular application and design constraints imposed on the overall system. Skilled artisans can implement the described functionality in various ways for each particular application, but such implementation decisions should not be interpreted as causing a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the invention.

Additionally, memory or other storage, as well as communication components, may be employed in embodiments of the invention. It will be appreciated that, for clarity purposes, the above description has described embodiments of the invention with reference to different functional units and processors. However, it will be apparent that any suitable distribution of functionality between different functional units, processing logic elements or domains may be used without detracting from the invention. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

The following items refer to preferred embodiments:
1. A method for performing an early measurement by a first wireless communication node, comprising:
   receiving a first message from a second wireless communication node, wherein the first message comprises early measurement configuration of one of the following: at least one first carrier frequency and at least one first frequency band; and
   performing an early measurement according to the early measurement configuration, when the first wireless communication node supports one of the following: a carrier-aggregation (CA) configuration and a dual-connectivity (DC) configuration, between one of the following: a serving carrier and a second frequency band of a serving cell of the second wireless communication node, and one of the following: the at least one first carrier frequency and the at least one first frequency band.
2. The method of item 1, wherein the early measurement configuration further comprises at least one of the following of the at least one first carrier frequency: carrier frequency information, frequency band information, an allowed measurement bandwidth, a measurement cell list, a validity area, a report quantity, and a quality threshold value, wherein the carrier frequency information comprises an absolute radio frequency channel number (ARFCN), wherein the report quantity comprises at least one of the following: reference signal received power (RSRP),reference signal received quality (RSRQ), and signal-to-interference-plus-noise ratio (SINR).
3. The method of item 1, wherein the at least one first carrier frequency belongs to the at least one first frequency band.
4. The method of item 1, wherein the first wireless communication node is in one of the following RRC state: a RRC idle state and a RRC inactive state.
5. The method of item 1, wherein the second frequency band of the serving cell of the second wireless communication node is one of the following: a frequency band selected by the first wireless communication node so as to represent a second carrier frequency of the serving cell, and one of frequency bands of the serving cell indicated by the second wireless communication node.
6. A method for configuring an early measurement by a first wireless communication node, comprising:
   transmitting a first message to a second wireless communication node, wherein the first message comprises an early measurement configuration of one of the following: at least one first carrier frequency and at least one first frequency band,
   wherein the early measurement configuration is used for the second wireless communication node to perform an early measurement, when the second wireless communication node supports one of the following: a carrier-aggregation (CA) configuration and a dual-connectivity (DC) configuration, between one of the following: a serving carrier and a second frequency band of a serving cell of the first wireless communication node, and one of the following: the at least one first carrier frequency and the at least one first frequency band.
7. The method of item 6, wherein the early measurement configuration further comprises at least one of the following of the at least one first carrier frequency: carrier frequency information, frequency band information, an allowed measurement bandwidth, a measurement cell list, a validity area, a report quantity, and a quality threshold value, wherein the carrier frequency information comprises an absolute radio frequency channel number (ARFCN), wherein the report quantity comprises at least one of the following: reference signal received power (RSRP),reference signal received quality (RSRQ), and signal-to-interference-plus-noise ratio (SINR).
8. The method of item 6, wherein the at least one first carrier frequency belongs to the at least one first frequency band.
9. The method of item 6, wherein the second wireless communication node is in one of the following RRC state: a RRC idle state and a RRC inactive state.
10. The method of item 6, wherein the second frequency band of the serving cell of the first wireless communication node is one of the following: a frequency band selected by the first wireless communication node so as to represent a second carrier frequency of the serving cell, and one of frequency bands of the serving cell indicated by the second wireless communication node.
11. A method for performing an early measurement by a first wireless communication node, comprising:
   receiving a first message from a second wireless communication node; and
   performing an early measurement according to the first message,
   wherein the first message comprises early measurement configuration for a first frequency set, wherein the first frequency set comprises at least one of the following: a first carrier frequency, a list of first carrier frequencies, a first frequency band, and a list of first frequency bands, wherein the early measurement configuration comprises at least one of the following of the first frequency set: an configuration applicability indicator, a measurement cell, a validity area, a Radio Access Technology (RAT) type, a RRC (Radio Resource Control) state of the first wireless communication node, and a Public Land Mobile Network Identifier (PLMN ID).
12. The method of item 1, wherein the configuration applicability indicator is configured to indicate that the at least one first frequency set is applicable to at least one of the following: a carrier-aggregation (CA) configuration and a dual-connectivity (DC) configuration.
13. The method of item 1, wherein the performing further comprises:
   performing an early measurement according to the early measurement configuration of at least one of the following: the at least one corresponding first frequency set, the measurement cell, and the validity area, when the first wireless communication node supports a first configuration type between a second frequency set of a serving cell and the first frequency set, and when one of the following: the first frequency set, the measurement cell, and the validity area, is configured as the first configuration type, wherein the first configuration type is at least one of the following: a CA configuration and a DC configuration.
14. The method of item 11, wherein the performing further comprises:
   performing an early measurement according to the early measurement configuration of the first frequency set, when the first wireless communication node camps on a serving cell of the second wireless communication node with a second frequency set, and when the first wireless communication node supports a DC configuration between the first frequency set and the second frequency set, wherein the first frequency set has a first RAT type and the second frequency set has a second RAT type, and wherein the first RAT type is different from the second RAT type.
15. The method of item 13, wherein the second frequency set of the serving cell of the second wireless communication node comprises at least one of the following: a serving carrier and a second frequency band, wherein the second frequency band is one of the following: a frequency band selected by the first wireless communication node so as to represent the serving carrier of the serving cell, and one of frequency bands of the serving cell indicated by the second wireless communication node.
16. The method of item 11, wherein the performing further comprises:
   performing an early measurement according to the early measurement configuration for the first wireless communication node in a first RRC state, when the first wireless communication node is in the first RRC state, wherein the first RRC state is one of the following: a RRC idle state and a RRC inactive state.
17. The method of item 11, wherein the corresponding parameter further comprises a priority value, wherein the priority value is configured to indicate the priority of an early measurement result of the at least one first frequency set in an early measurement result report.
18. The method of item 11, wherein the corresponding parameter further comprises at least one of the following: at least one first parameter to support beam measurement, at least one second parameter to support Synchronization Signal Block (SSB)-based measurement, and at least one third parameter to support Channel State Information-Reference Signal (CSI-RS)-based measurement.
19. The method of item 18, wherein the first parameter comprises at least one of the following: IE ReportQuantityRsIndexes, IE maxNrofRsIndexesToReport, and includeBeamMeasurements, wherein the IE ReportQuantityRsIndexes indicates a quantity to be measured and reported, wherein the IE maxNrofRsIndexesToReport is a max number of measurement results on a RS in an early measurement result report, wherein the includeBeamMeasurements indicates whether a beam measurement result is included in the early measurement result report.
20. The method of item 18, wherein the second parameter comprises at least one of the following: IE SMTC-SSB, SSB, IE ssb-toMeasure, IE absThreshSS-BlocksConsolidation, IE norfSS-BlocksToAverage, and deriveSSB-IndexFromCell, wherein the IE SMTC-SSB indicates a measurement timing, wherein the SSB indicates a sub-carrier spacing of a reference signal to be measured, wherein the IE ssb-toMeasure indicates at least one SSB to be measured, wherein the IE absThreshSS-BlocksConsolidation configures a threshold for consolidation of L1 measurement per RS index, wherein the IE nrofSS-BlocksToAverage configures a number of SSBs for determinining a cell measurement derivation, and wherein the deriveSSB-IndexFromCell indicates whether a timing of a detected cell on the first carrier frequency can be used by the first wireless communication node to derive a SSB index of all neighboring cells on the first carrier frequency.
21. The method of item 18, wherein the third parameter comprises at least one of the following: refFreqCSI-RS, absThreshCIS-RS-Consolidation, and nrofCSInrofCSI-RS-ResourcesToAverage , wherein the refFreqCSI-RS configures a point A for mapping of a CSI-RS to physical resources, wherein the absThreshCIS-RS-Consolidationconfigures an absolute threshold for a consolidation of an early measurement result per CSI-RS resource from a corresponding L1 filter, and wherein the nrofCSInrofCSI-RS-ResourcesToAverage configures a maximum number of early measurement results per beam to be averaged based on at least one of the following: the CSI-RS resources, a physical cell ID, a reference cell ID, and an index of a list of cell ID, wherein the list of cell ID is used to indicate the cell providing a timing reference for the CSI-RS resources without a SSB.
22. The method of item 11, further comprising:
   transmitting a second message to the second wireless communication node, wherein the second message is configured to indicate availability of an early measurement result of the at least one corresponding first frequency set;
   receiving a third message from the second wireless communication node, wherein the third message is to request the early measurement result;
   preparing an early measurement report, wherein the early measurement report comprises the early measurement result; and
   transmitting a fourth message to the second wireless communication node, wherein the fourth message comprises the early measurement report.
23. The method of item 22, wherein the second message is one of the following: a RRC resume request message, a RRC setup request message, a RRC resume complete message, and a RRC setup complete message.
24. The method of item 22, wherein the third message is one of the following: a RRC resume message, a RRC setup message, and a UE information request message.
25. The method of item 22, wherein the third message comprises a report frequency number.
26. The method of item 22, wherein the fourth message is one of the following: a RRC resume complete message, a RRC setup complete message, and a UE information response message according to the third message.
27. A method for configuring an early measurement by a first wireless communication node, comprising:
   transmitting a first message to a second wireless communication node,
   wherein the first message comprises early measurement configuration for a first frequency set, wherein the first frequency set comprises at least one of the following: a first carrier frequency, a list of first carrier frequencies, a first frequency band, and a list of first frequency bands, wherein the early measurement configuration is used for the second wireless communication node to perform an early measurement, wherein the early measurement configuration comprises at least one of the following of the first frequency set: an configuration applicability indicator, a measurement cell, a validity area, a Radio Access Technology (RAT) type, a RRC (Radio Resource Control) state of the first wireless communication node, and a Public Land Mobile Network Identifier (PLMN ID).
28. The method of item 27, wherein the configuration applicability indicator is configured to indicate that the first frequency set is applicable to at least one of the following: a carrier-aggregation (CA) configuration and a dual-connectivity (DC) configuration.
29. The method of item 27, wherein the corresponding parameter further comprises a priority value, wherein the priority value is configured to indicate the priority of an early measurement result of the at least one first frequency set in an early measurement result report.
30. The method of item 27, wherein the corresponding parameter further comprises at least one of the following: at least one first parameter to support beam measurement, at least one second parameter to support Synchronization Signal Block (SSB)-based measurement, and at least one third parameter to support Channel State Information-Reference Signal (CSI-RS)-based measurement.
31. The method of item 30, wherein the first parameter comprises at least one of the following: IE ReportQuantityRsIndexes, IE maxNrofRsIndexesToReport, and includeBeamMeasurements, wherein the IE ReportQuantityRsIndexes indicates a quantity to be measured and reported, wherein the IE maxNrofRslndexesToReport is a max number of measurement results on a RS in an early measurement result report, wherein the includeBeamMeasurements indicates whether a beam measurement result is included in the early measurement result report.
32. The method of item 30, wherein the second parameter comprises at least one of the following: IE SMTC-SSB, SSB, IE ssb-toMeasure, IE absThreshSS-BlocksConsolidation, IE norfSS-BlocksToAverage, and deriveSSB-IndexFromCell, wherein the IE SMTC-SSB indicates a measurement timing, wherein the SSB indicates a sub-carrier spacing of a reference signal to be measured, wherein the IE ssb-toMeasure indicates at least one SSB to be measured, wherein the IE absThreshSS-BlocksConsolidation configures a threshold for consolidation of L1 measurement per RS index, wherein the IE nrofSS-BlocksToAverage configures a number of SSBs for determinining a cell measurement derivation, and wherein the deriveSSB-IndexFromCell indicates whether a timing of a detected cell on the first carrier frequency can be used by the first wireless communication node to derive a SSB index of all neighboring cells on the first carrier frequency.
33. The method of item 30, wherein the third parameter comprises at least one of the following: refFreqCSI-RS, absThreshCIS-RS-Consolidation, and nrofCSInrofCSI-RS-ResourcesToAverage , wherein the refFreqCSI-RS configures a point A for mapping of a CSI-RS to physical resources, wherein the absThreshCIS-RS-Consolidationconfigures an absolute threshold for a consolidation of an early measurement result per CSI-RS resource from a corresponding L1 filter, and wherein the nrofCSInrofCSI-RS-ResourcesToAverage configures a maximum number of early measurement results per beam to be averaged based on at least one of the following: the CSI-RS resources, a physical cell ID, a reference cell ID, and an index of a list of cell ID, wherein the list of cell ID is used to indicate the cell providing a timing reference for the CSI-RS resources without a SSB.
34. The method of item 27, further comprising:
   receiving a second message from the second wireless communication node, wherein the second message is configured to indicate availability of an early measurement result of the first frequency set;
   transmitting a third message to the second wireless communication node, wherein the third message is to request the early measurement result; and
   receiving a fourth message from the second wireless communication node, wherein the fourth message comprises the early measurement report, wherein the early measurement report is prepared by the second wireless communication node and comprises the early measurement result.
35. The method of item 34, wherein the third message comprises a report frequency number.
36. A method for performing an early measurement by a first wireless communication node, comprising:
   transmitting a first message to a second wireless communication node;
   receiving a second message from the second wireless communication node; and
   transmitting a third message to a second wireless communication node,
   wherein the first message is configured to indicate to the second wireless communication node availability of early measurement results, wherein the second message is configured to request the early measurement results from the first wireless communication node, and wherein the third message comprises the early measurement results.
37. The method of item 36, wherein the first message is a RRC resume request message.
38. The method of item 36, wherein the second message is a RRC resume message.
39. The method of item 36, wherein the third message is a RRC resume complete message.
40. The method of item 36, wherein the first message further indicates that the early measurement results are for carrier frequencies applicable to at least one of the following: carrier aggregation (CA) and dual connectivity (DC) configurations.
41. The method of item 36, further comprising
   prior to the transmitting a first message, receiving a fourth message from the second wireless communication node; and
   performing the early measurement according to the fourth message,
   wherein the fourth message comprises an early measurement configuration, wherein the early measurement configuration comprises at least one of the following: carrier frequency information, an allowed measurement bandwidth, a measurement cell list, a validity area, a report quantity, and a quality threshold value, wherein the carrier frequency information comprises an absolute radio frequency channel number (ARFCN), wherein the report quantity comprises at least one of the following: reference signal received power (RSRP), reference signal received quality (RSRQ), and signal-to-interference-plus-noise ratio (SINR).
42. A method for configuring an early measurement by a first wireless communication node, comprising:
   receiving a first message from a second wireless communication node;
   transmitting a second message to the second wireless communication node; and
   receiving a third message from a second wireless communication node,
   wherein the first message is configured to indicate to the first wireless communication node availability of early measurement results, wherein the second message is configured to request the early measurement results from the second wireless communication node, and wherein the third message comprises the early measurement results.
43. The method of item 42, wherein the first message is a RRC resume request message.
44. The method of item 42, wherein the second message is a RRC resume message.
45. The method of item 42, wherein the third message is a RRC resume complete message.
46. The method of item 42, wherein the first message further indicates that the early measurement results are for carrier frequencies applicable to at least one of the following: carrier aggregation (CA) and dual connectivity (DC) configurations.
47. The method of item 42, further comprising,
   prior to the receiving a first message, transmitting a fourth message to the second wireless communication node,
   wherein the fourth message comprises an early measurement configuration, wherein the early measurement configuration is used by the second wireless communication node to perform an early measurement, wherein the early measurement configuration comprises at least one of the following: carrier frequency information, an allowed measurement bandwidth, a measurement cell list, a validity area, a report quantity, and a quality threshold value, wherein the carrier frequency information comprises an absolute radio frequency channel number (ARFCN), wherein the report quantity comprises at least one of the following: reference signal received power (RSRP), reference signal received quality (RSRQ), and signal-to-interference-plus-noise ratio (SINR).
48. A computing device comprising at least one processor and a memory coupled to the processor, the at least one processor configured to carry out the method of any one items 1 through 47.
49. A non-transitory computer-readable medium having stored thereon computer-executable instructions for carrying out the method of any one items 1 through 47.

## Claims

1. A method for performing an early measurement by a first wireless communication node, comprising:
receiving a first message from a second wireless communication node, wherein the first message comprises early measurement configuration of at least one first carrier frequency; and
performing an early measurement according to the early measurement configuration, in case the first wireless communication node supports a carrier-aggregation, CA, configuration between: a serving carrier of a serving cell of the second wireless communication node, and the at least one first carrier frequency, or
performing an early measurement according to the early measurement configuration, in case the first wireless communication node supports a Dual Connectivity, DC, configuration between: a serving carrier of the serving cell of the second wireless communication node and the at least one first carrier frequency,
wherein the early measurement configuration in the first message comprises:
at least one first carrier frequency which is configured as applicable to one of the following: the CA configuration and the DC configuration, or
at least one first carrier frequency with a validity area which is configured as applicable to one of the following: the CA configuration and the DC configuration.

2. The method of claim 1, wherein the first message comprises at least one of the following: a first table for the CA configuration, a second table for the DC configuration, and a third table for both the CA and DC configurations, wherein the first table, the second table, and the third table each comprises at least one carrier frequency and one applicability indicator.

3. The method of claim 2, wherein the applicability indicator of a corresponding carrier frequency has at least two values and is used to indicate whether the corresponding carrier frequency is applicable to at least one of the following: the DC configuration and the CA configuration.

4. The method of any one of claims 1 to 3, wherein the at least one first carrier frequency is defined by a first carrier frequency and a first allowed measurement bandwidth.

5. The method of any one of claims 1 to 4, comprising:
receiving an indication from the second wireless communication node, wherein the indication indicates:
that early measurement results on the first carrier frequency or the first frequency band that are applicable to the CA configuration and/or the DC configuration, can be processed, and/or
the first wireless communication node to indicate in a Radio Resource Control, RRC, message whether early measurement results applicable to CA or DC configuration are available.

6. The method of any one of claims 1 to 5, comprising:
transmitting a second message, to the second wireless communication node, comprising an indicator configured to indicate that early measurement results of a corresponding carrier frequency are available for at least one of the following: the CA configuration and the DC configuration.

7. The method of any one of claims 1 to 6, comprising:
receiving a third message from the second wireless communication node, wherein the third message is a request for reporting the early measurement results which are applicable to the DC configuration and/or the CA configuration.

8. The method of claim 7, wherein the third message further comprises:
a report frequency number, or
separate report frequency numbers for the carrier frequencies for the DC configuration and for the CA configuration, respectively.

9. A method for performing an early measurement by a second wireless communication node, comprising:
transmitting a first message to a first wireless communication node, wherein the first message comprises early measurement configuration of at least one first carrier frequency,
wherein the early measurement configuration in the first message comprises:
at least one first carrier frequency which is configured as applicable to one of the following: the CA configuration and the DC configuration, or
at least one first carrier frequency with a validity area which is configured as applicable to one of the following: the CA configuration and the DC configuration.

10. The method of claim 9, wherein the first message comprises at least one of the following: a first table for the CA configuration, a second table for the DC configuration, and a third table for both the CA and DC configurations, wherein the first table, the second table, and the third table each comprises at least one carrier frequency and one applicability indicator.

11. The method of claim 10, wherein the applicability indicator of a corresponding carrier frequency has at least two values and is used to indicate whether the corresponding carrier frequency is applicable to at least one of the following: the DC configuration and the CA configuration.

12. The method of any one of claims 9 to 11, wherein the at least one first carrier frequency is defined by a first carrier frequency and a first allowed measurement bandwidth.

13. The method of any one of claims 9 to 12, comprising:
transmitting an indication to the first wireless communication node, wherein the indication indicates:
that early measurement results on the first carrier frequency or the first frequency band that are applicable to the CA configuration and/or the DC configuration, can be processed, and/or
the first wireless communication node to indicate in a Radio Resource Control, RRC, message whether early measurement results applicable to CA or DC configuration are available.

14. The method of any one of claims 9 to 13, comprising:
receiving a second message, from the first wireless communication node, comprising an indicator configured to indicate that early measurement results of a corresponding carrier frequency are available for at least one of the following: the CA configuration and the DC configuration.

15. The method of any one of claims 9 to 14, comprising:
receiving a third message from the second wireless communication node, wherein the third message is a request for reporting the early measurement results which are applicable to the DC configuration and/or the CA configuration, preferably wherein the third message further comprises:
a report frequency number, or
separate report frequency numbers for the carrier frequencies for the DC configuration and for the CA configuration, respectively.
